# EUROPEAN PATENT APPLICATION

(11) **EP 4 020 305 A1**
(43) Date of publication of application: **29.06.2022**
(21) Application number: 21213827.5
(22) Date of filing: 10.12.2021
(51) Int. Cl.: G06F 40/30, G06N 3/08

(54) **PRE-TRAINED LANGUAGE MODEL FINE-TUNING METHOD AND APPARATUS AND NON-TRANSITORY COMPUTER-READABLE MEDIUM**

(30) Priority: 22.12.2020 CN 202011529711
(71) Applicant: Ricoh Company, Ltd., Tokyo 143-8555 (JP)
(72) Inventor: Xiao, Tianxiong, Beijing, 100044 (CN); Tong, Yixuan, Beijing, 100044 (CN); Dong, Bin, Beijing, 100044 (CN); Jiang, Shanshan, Beijing, 100044 (CN); Zhang, Jiashi, Beijing, 100044 (CN)
(74) Representative: White, Duncan Rohan

(57) **Abstract**

Disclosed are a pre-trained language model fine-tuning method and apparatus. The method includes steps of obtaining a pre-trained language model and determining a gradient threshold of each coding layer in the pre-trained language model; performing training on the pre-trained language model, and in the training process, calculating, before updating a model parameter(s) of any one coding layer each time, a gradient norm of the any one coding layer; and, in the training process, before updating the model parameter(s) of the any one coding layer each time, determining, based on whether the gradient norm of the any one coding layer is less than the gradient threshold of the any one coding layer, whether it is necessary to update the model parameter(s) of the any one coding layer this time.

## Description

### BACKGROUND OF THE DISCLOSURE

### 1. Field of the Disclosure

The present disclosure relates to the field of pre-trained language models (PLMs) in natural language processing (NLP), and particularly, at least a pre-trained language model fine-tuning method and apparatus as well as a non-transitory computer-readable medium.

### 2. Description of the Related Art

Pre-trained models have long been used in the field of image processing. The concept of a pre-trained language model was considered to be first proposed in 2015, and gradually achieved excellent performance in various tasks. Prior to this, word embedding was usually adopted in the natural language processing field for embedding words in a multi-dimensional space. After a word embedding based model is trained by employing a relatively large corpus, it can capture the relationship between words. Well-used pre-trained word vector models include Word2vec, GloVe, and the like. Moreover, word embedding can be used to initialize the first embedding layer of a downstream model, thereby constructing an entire model together with other functional layers. However, early word embedding methods did not retain the context information of each word, so their applications were limited.

A pre-trained language model is trained by utilizing a large number of texts that have appeared in people's lives. By letting the model learn the probability distribution of appearance of each word or character in these texts, it is possible to obtain a model that fits the distributions of these texts. In addition, a language model usually predicts what an adjacent word or character is on the basis of the corresponding context, and there may exist some differences depending on the training tasks. Therefore, each label of the corpus of the language model is its context, and there is no need to conduct relabeling. The result is that a large-scale corpus can be almost unlimitedly used to train a language model, so as to make it possible to learn rich semantic knowledge. Due to the large-scale corpus, the pre-trained language model can gain a powerful capability, so that by making use of this kind of pre-trained language model, it is possible to greatly improve the performance of the relating downstream task and reduce the difficulty of training. Conventional pre-trained language models of current scenes may be inclusive of ELMo (Embeddings from Language Models), GPT/GPT2 (Generative Pre-Training), and BERT (Bidirectional Encoder Representations from Transformers) based models, etc.

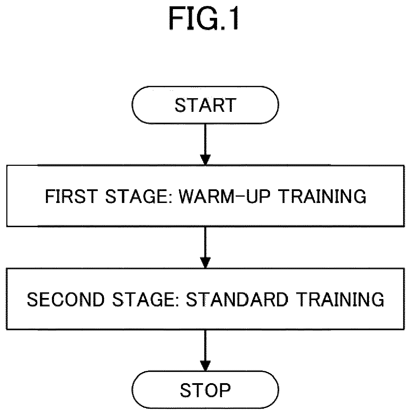

After acquiring a pre-trained language model, it is possible to utilize the corresponding pre-trained model parameters to initialize the network structure of a downstream task, so that the common linguistic knowledge learned through the pre-training process may be introduced into the downstream task. In order to adapt a model to solve a downstream task, it is necessary to fine-tune the network parameters of the model and carry out structural transformation with respect to the model. As shown in FIG. 1, a conventional pre-trained language model fine-tuning process generally contains a first stage and a second stage, namely, warm-up training and standard training. After the warm-up training stage, the process enters the standard training stage, and if a predetermined training ending condition is satisfied in the standard training stage, then the process stops. Compared to the standard training stage, during the warm-up training stage, the pre-trained language model is adjusted more significantly, and the model parameters are adjusted more greatly, thereby causing the common linguistic knowledge learned by the pre-trained language model in the pre-training process to be lost (forgotten). As such, in the said pre-trained language model fine-tuning process, how to reach a compromise between retaining the common linguistic knowledge and obtaining a model suitable for a downstream task has become an urgent problem to be solved.

### SUMMARY OF THE DISCLOSURE

The present disclosure aims to provide at least a pre-trained language model fine-tuning method and apparatus as well as a non-transitory computer-readable medium, by which it is possible to reach (achieve) a good compromise between the retention of the common linguistic knowledge gained by a pre-trained language model and the obtainment of a model proper for a downstream task.

According to a first aspect of the present disclosure, a pre-trained language model fine-tuning method is provided that includes steps of obtaining a pre-trained language model, and determining a gradient threshold of each coding layer in the pre-trained language model; performing training on the pre-trained language model, and in the training process, calculating, before updating a model parameter(s) of any one (any single) coding layer each time, a gradient norm of the any one coding layer; and, in the training process, before updating the model parameter(s) of the any one coding layer each time, determining, based on whether the gradient norm of the any one coding layer is less than the gradient threshold of the any one coding layer, whether it is necessary to update the model parameter(s) of the any one coding layer this time.

Optionally, the pre-trained language model fine-tuning method further includes a step of, in the training process, for each time updating the model parameter(s) of the any one coding layer, in a case where it is determined that it is necessary to update the model parameter(s) of the any one coding layer this time, updating the model parameter(s) of the any one coding layer based on a gradient of the model parameter(s) of the any one coding layer, and in a case where it is determined that it is not necessary to update the model parameter(s) of the any one coding layer this time, rejecting to update the model parameter(s) of the any one coding layer.

Optionally, the gradient norm of the any one coding layer is a sum of squares of gradients of the respective model parameters of the any one coding layer; a sum of absolute values of the respective model parameters of the any one coding layer; or a largest one of absolute values (i.e., the greatest absolute value) of the respective model parameters of the any one coding layer.

Optionally, the gradient threshold of each coding layer in the pre-trained language model is calculated based on a predetermined threshold function, wherein, an input of the predetermined threshold function is a sequence number of the same coding layer, and an output of the predetermined threshold function is the gradient threshold of the same coding layer.

Optionally, the sequence numbers of the respective coding layers in the pre-trained language model are sequentially numbered in a direction from an input layer to an output layer of the pre-trained language model, and the output of the predetermined threshold function is positively correlated with the input of the predetermined threshold function.

Optionally, the gradient norm of the any one coding layer in the pre-trained language model is a non-negative value.

According to a second aspect of the present disclosure, a pre-trained language model fine-tuning apparatus is provided that contains an obtainment module configured to obtain a pre-trained language model, and determine a gradient threshold of each coding layer in the pre-trained language model; a calculation model configured to perform training on the pre-trained language model, and in the training process, calculate, before updating a model parameter(s) of any one coding layer each time, a gradient norm of the any one coding layer; and a determination module configured to, in the training process, before updating the model parameter(s) of the any one coding layer each time, determine, based on whether the gradient norm of the any one coding layer is less than the gradient threshold of the any one coding layer, whether it is necessary to update the model parameter(s) of the any one coding layer this time.

Optionally, the pre-trained language model fine-tuning apparatus further includes an update module configured to, in the training process, for each time updating the model parameter(s) of the any one coding layer, in a case where it is determined by the determination module that it is necessary to update the model parameter(s) of the any one coding layer this time, update the model parameter(s) of the any one coding layer based on a gradient of the model parameter(s) of the any one coding layer, and in a case where it is determined by the determination module that it is not necessary to update the model parameter(s) of the any one coding layer this time, reject to update the model parameter(s) of the same coding layer.

Optionally, the calculation module is further configured to make the gradient norm of the any one coding layer to be a sum of squares of gradients of the respective model parameters of the any one coding layer; a sum of absolute values of the respective model parameters of the any one coding layer; or a largest one of absolute values of the respective model parameters of the any one coding layer.

Optionally, the determination module is further configured to calculate, based on a predetermined threshold function, the gradient threshold of each coding layer in the pre-trained language model, wherein, an input of the predetermined threshold function is a sequence number of the same coding layer, and an output of the predetermined threshold function is the gradient threshold of the same coding layer.

Optionally, the sequence numbers of the respective coding layers in the pre-trained language model are sequentially numbered in a direction from an input layer to an output layer of the pre-trained language model, and the output of the predetermined threshold function is positively correlated to the input of the predetermined threshold function.

Optionally, the gradient norm of the any one coding layer in the pre-trained language model is a non-negative value.

According to a third aspect of the present disclosure, another pre-trained language model fine-tuning apparatus is provided that involves a processor and a storage connected to the processor. The storage may store computer-executable instructions that, when executed by the processor, can cause the processor to implement the above-mentioned pre-trained language model fine-tuning method.

According to a fourth aspect of the present disclosure, a computer-executable program and a non-transitory computer-readable medium are provided. The computer-executable program may cause a computer to conduct the said pre-trained language model fine-tuning method. The non-transitory computer-readable medium can store computer-executable instructions (i.e., the computer-executable program) for execution by a computer having a processor. The computer-executable instructions, when executed by the processor, may render the processor to perform the above-described pre-trained language model fine-tuning method.

On the basis of at least the pre-trained language model fine-tuning method and apparatuses, by setting a gradient threshold for each coding layer in a pre-trained language model, and determining, based on whether the gradient norm of the same coding layer is less than the gradient threshold of the same coding layer, whether there is a need to update the model parameter(s) of the same coding layer, it is possible to avoid excessive model parameter adjustment, thereby being able to reach a good compromise between retaining the common linguistic knowledge learned by the pre-trained language model and attaining a model suitable for a downstream task, so that the model is capable of as much as retaining (i.e., maximizing) the common linguistic knowledge, and the performance of the model can be dramatically ameliorated.

### BRIEF DESCRIPTION OF THE DRAWINGS

FIG. 1 is a flowchart of a conventional pre-trained language model fine-tuning process;
FIG. 2 is a flowchart of a pre-trained language model fine-tuning method according to an embodiment of the present disclosure;
FIG. 3 is a flowchart of another pre-trained language model fine-tuning method in accordance with an embodiment of the present disclosure;
FIG. 4 presents an example of a structure of a pre-trained language model provided in the embodiments of the present disclosure;
FIG. 5 shows an example of a predetermined threshold function used in the embodiments of the present disclosure;
FIG. 6 is a block diagram of a pre-trained language model fine-tuning apparatus according to an embodiment of the present disclosure;
FIG. 7 is a block diagram of another pre-trained language model fine-tuning apparatus according to an embodiment of the present disclosure; and
FIG. 8 is a block diagram of still another pre-trained language model fine-tuning apparatus according to an embodiment of the present disclosure.

### DETAILED DESCRIPTION OF THE PREFERRED EMBODIMENTS

In order to let a person skilled in the art better understand the present disclosure, hereinafter, the embodiments of the present disclosure are concretely described with reference to the drawings. However, it should be noted that the same symbols, that are in the specification and the drawings, stand for constructional elements having basically the same function and structure, and the repetition of the explanations to the constructional elements is omitted.

As set forth in the background of the present disclosure, during the fine-tuning process of a pre-trained language model, it is necessary to carry out model parameter adjustment on the basis of a downstream task, so as to obtain a model suitable for the downstream task. However, excessive model parameter adjustment may cause the common linguistic knowledge learned by the pre-trained language model in the pre-training process to be lost or forgotten, thereby negatively influencing the performance of the model suitable for the downstream task.

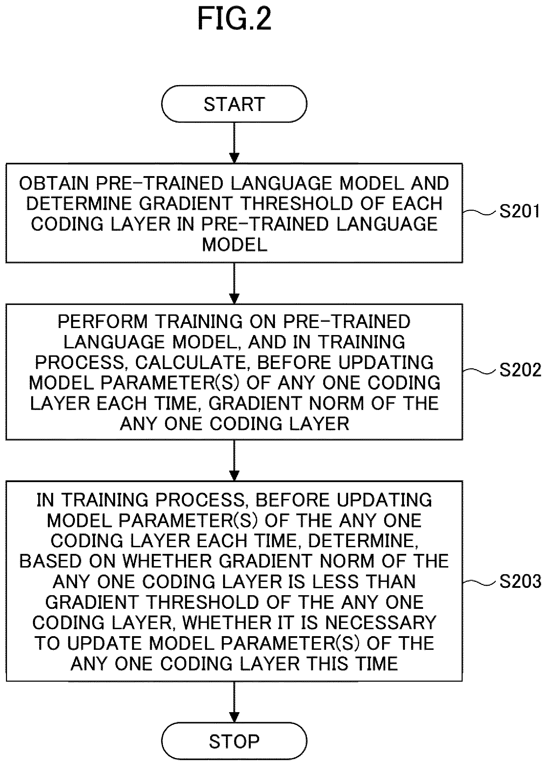

In order to reach a good compromise between the retention of the common linguistic knowledge gained by a pre-trained language model and the obtainment of a model proper for a downstream task, so as to retain as much of the common linguistic knowledge as possible and enhance the performance of the model proper for the downstream task, a pre-trained language model fine-tuning method is provided according to an embodiment of the present disclosure. As presented in FIG. 2, the pre-trained language model fine-tuning method is inclusive of STEP S201 to S203.

In STEP S201, a pre-trained language model is obtained, and the gradient threshold of each coding layer in the pre-trained language model is determined.

Here the pre-trained language model is a model obtained by conducting training in a pre-training process. In general, the pre-trained language model is trained based on a large number of texts, and can learn a lot of common linguistic knowledge. Specifically, the pre-trained language model may be an ELMo based model, a GPT/GPT2 based model, a BERT based model, etc.; however, the present disclosure is not limited to this.

The pre-trained language model usually includes an input layer and an output layer, and there exists a plurality of coding layers between the input layer and the output layer. Additionally, in STEP S201, the gradient threshold of each coding layer is determined for judgement in the following-up step.

STEP S202 is carrying out training with respect to the pre-trained language model, and in the training process, calculating, before updating the model parameter(s) of any one coding layer each time, the gradient norm of the any one coding layer.

When applying a pre-trained language model to a downstream task, it is necessary to fine-tune the pre-trained language model on the basis of the downstream task. Specifically, it is possible to use training samples to train the pre-trained language model, so as to adjust its model parameters. Such a fine-tuning process usually contains a warm-up training stage and a standard training stage, and compared with the standard training stage, in the warm-up training stage, the model parameters may be adjusted more greatly.

For example, in a fine-tuning process, a pre-trained language model may be trained 10,000 times, of which the first 2,000 times are warm-up training, and the last 8,000 times are standard training. Generally speaking, training samples utilized in the warm-up training stage and the standard training stage are different. As an illustration, the complexity of the training samples adopted in the warm-up training stage is lower than the complexity of the training samples adopted in the standard training stage. Specifically, the text length of each training sample used in the warm-up training stage is shorter than the text length of each training sample used in the standard training stage. In addition, the learning rate of the pre-trained language model in the warm-up training stage may gradually increase as the fine-tuning process progresses.

Preferably, considering that the model parameters are adjusted more greatly in the warm-up training stage, the pre-trained language model fine-tuning method according to the embodiments of the present disclosure may be applied to the warm-up training stage; of course, it may also be executed in the standard training stage. That is, the present disclosure is not limited to this.

In STEP S202, the training samples of the downstream task can be employed to conduct training regarding the pre-trained language model, so as to adjust (fine-tune) the model parameter(s) thereof in the training process. Because iterative training may be implemented a plurality of times during the training process, after iterative training is conducted each time, it is usually necessary to update the model parameter(s) of the corresponding coding layer. In order to avoid excessive model parameter adjustment, before performing model parameter adjustment on each coding layer, the gradient norm of the same coding layer is calculated. The gradient norm is used to express the degree of gradient change of a model parameter(s) of the corresponding coding layer. Generally, the greater the degree of gradient change of a model parameter(s) of a coding layer is, the greater the corresponding gradient norm is. Here, the gradient norm of each coding layer is usually a non-negative value.

Referring again to FIG. 2; in STEP S203, in the training process, before updating the model parameter(s) of the any one coding layer each time, whether it is necessary to update the model parameter(s) of the any one coding layer this time is determined based on whether the gradient norm of the any one coding layer is less than the gradient threshold of the any one coding layer.

In this step, each time after iterative training is finished, by comparing the gradient norm of the any one coding layer and the gradient threshold of the any one coding layer, it is possible to determine whether there is a need to update the model parameter(s) of the any one coding layer. Specifically, before updating the model parameter(s) of the any one coding layer each time, if the gradient norm of the any one coding layer is less than the gradient threshold of the any one coding layer, then it is determined that there is a need to update the model parameter(s) of the any one coding layer this time; otherwise, it is determined that it is not necessary to update the model parameter(s) of the any one coding layer this time.

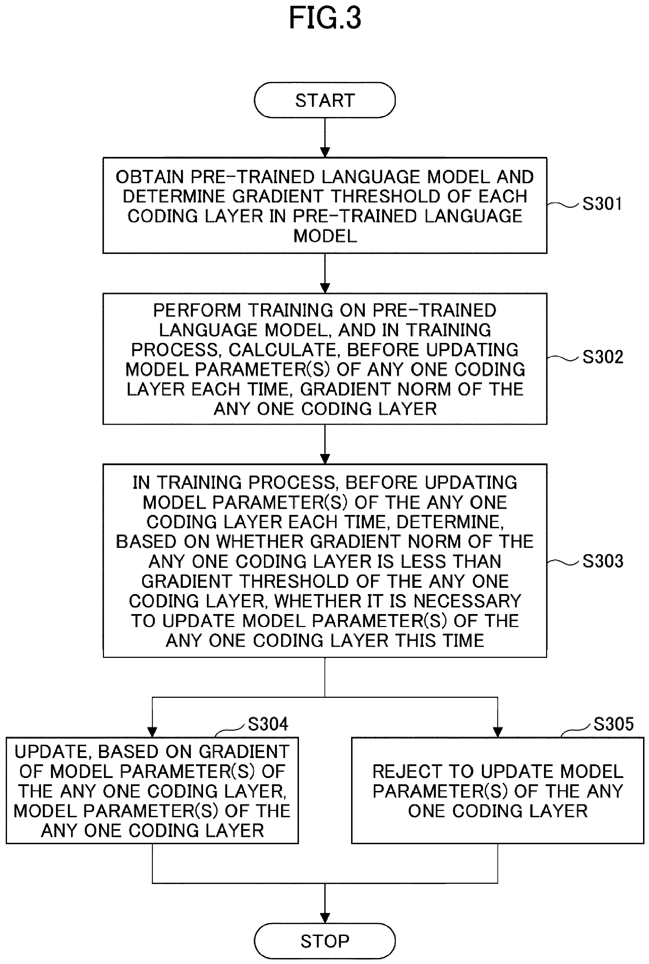

As illustrated in FIG. 3, another pre-trained language model fine-tuning method is provided in accordance with an embodiment of the present disclosure. The other pre-trained language model fine-tuning method is inclusive of STEP S301 to S305.

In STEP S301, a pre-trained language model is obtained, and the gradient threshold of each coding layer in the pre-trained language model is determined.

STEP S302 is performing training on the pre-trained language model, and in the training process, calculating, before updating the model parameter(s) of any one coding layer each time, the gradient norm of the any one coding layer.

In STEP S303, in the training process, before updating the model parameter(s) of the any one coding layer each time, whether it is necessary to update the model parameter(s) of the any one coding layer this time is determined based on whether the gradient norm of the any one coding layer is less than the gradient threshold of the any one coding layer.

Here it should be noted that because STEPS S301 to S303 of FIG. 3 are similar to STEPS S201 to S203 in FIG. 2, for the sake of convenience, their details are omitted.

Referring again to FIG. 3; STEP S304 is, in the training process, for each time updating the model parameter(s) of the any one coding layer, in a case where it is determined that it is necessary to update the model parameter(s) of the any one coding layer, updating, based on the gradient of the model parameter(s) of the any one coding layer, the model parameter(s) of the any one coding layer.

For each time the model parameter(s) of the any one coding layer is updated, if it is determined that there is a need to update the model parameter(s) of the any one coding layer this time, then it is possible to conduct update regarding the model parameter(s) of the any one coding layer on the basis of the gradient of the model parameter(s) of the any one coding layer. Here, after the update process, if a predetermined training ending condition is met, then the process of the other pre-trained language model fine-tuning method is completed; otherwise, the next round of iterative training is continued.

STEP S305 is, in the training process, for each time updating the model parameter(s) of the any one coding layer, in a case where it is determined that it is not necessary to update the model parameter(s) of the any one coding layer, rejecting to update the model parameter(s) of the any one coding layer.

For each time the model parameter(s) of the any one coding layer is updated, if it is determined that the model parameter(s) of the any one coding layer dose not need to be updated this time, then it is rejected to update the model parameter(s) of the any one coding layer. Subsequently, it is determined whether the predetermined training ending condition is satisfied, and if yes, then the process of the other pre-trained language model fine-tuning method is completed; otherwise, the next round of iterative training is continued.

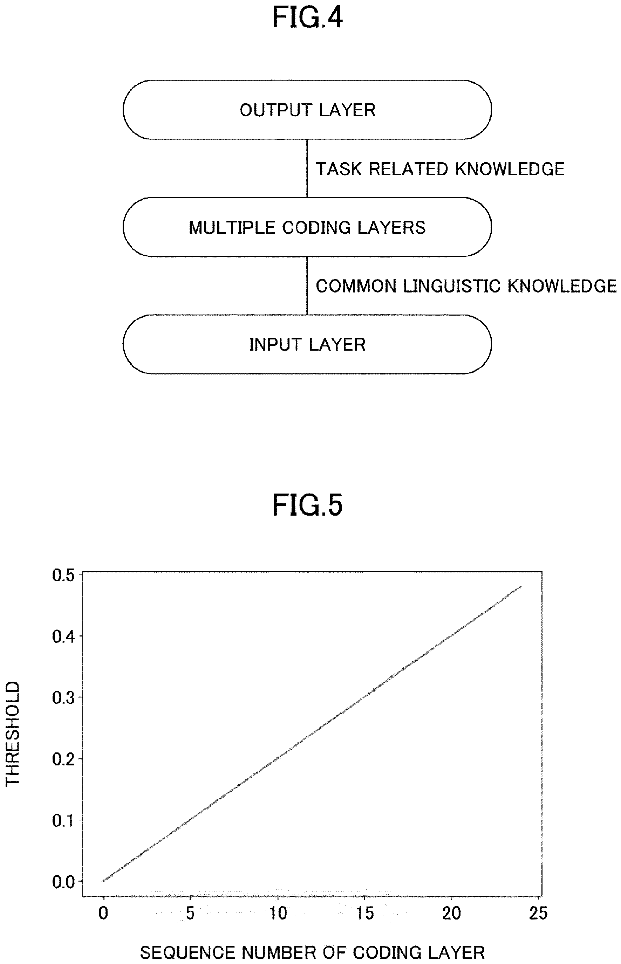

FIG. 4 shows an exemplary structure of a pre-trained language model used in the embodiments of the present disclosure, in which an input layer, an output layer, and a plurality of coding layers between the input layer and the output layer are involved. Generally, the closer a coding layer is to the input layer, the more linguistic knowledge (i.e. common linguistic knowledge) is learned, such as grammatical structure, word characteristics, etc., and the closer a coding layer is to the output layer, the more knowledge related to a downstream task (i.e., task related knowledge) is learned. Accordingly, the closer a coding layer is to the input layer, the smaller the gradient threshold of the coding layer is, and the closer a coding layer is to the output layer, the larger the gradient threshold of the coding layer is. In this way, the coding layer close to the input layer can as much as retain the common linguistic knowledge, and the coding layer close to the output layer can learn more task related knowledge, so that it is possible to reach a good compromise between the retention of the common linguistic language attained by the pre-trained language model and the acquisition of a model proper for the downstream task.

Furthermore, in STEP 201 of FIG. 2 or STEP S301 of FIG. 3, the gradient threshold of each coding layer in the pre-trained language model can be calculated based on a predetermined threshold function. The input of the predetermined threshold function is the sequence number of each coding layer, and the output of the predetermined threshold function is the gradient threshold of the same coding layer.

If it is assumed that the sequence numbers of the respective coding layers in a pre-trained language model are sequentially numbered in the direction from the input layer to the output layer of the pre-trained language model (e.g., the sequence numbers are 1, 2, ..., n), then the output of the predetermined threshold function is positively correlated with the input of the predetermined threshold function. This may result that the closer a coding layer is to the input layer, the smaller the gradient threshold of the coding layer is, and the closer a coding layer is to the output layer, the larger the gradient threshold of the coding layer is. In addition, the gradient norm of each coding layer in the pre-trained language model is a non-negative value. FIG. 5 shows an example of a predetermined threshold function. In this example, the gradient threshold output by the predetermined threshold function is in a linear relationship with the input coding layer sequence number, and the output increases as the input increases.

Moreover, in STEP S202 of FIG. 2 or STEP S302 in FIG. 3, the gradient norm of any one coding layer can be calculated by means of any one of the following approaches, namely, (1) calculating the sum of squares of the gradients of the respective model parameters of the any one coding layer to obtain the gradient norm of the any one coding layer; (2) calculating the sum of the absolute values of the respective model parameters of the any one coding layer to acquire the gradient norm of the any one coding layer; and (3) determining the largest one of the absolute values of the respective model parameters of the any one coding layer to serve as the gradient norm of the any one coding layer.

Of course, it is also possible to calculate the gradient norm of the any one coding layer by adopting other approaches, for example, calculating the average value of the absolute values of the respective model parameters of the any one coding layer to gain the gradient norm of the any one coding layer, performing weighted summation on the absolute values of the respective model parameters of the any one coding layer by using a predetermined parameter weight(s) to acquire the gradient norm of the any one coding layer, and so on and so forth. However, the present disclosure is not limited to this.

By way of the above-described pre-trained language model fine-tuning methods, in the fine-tuning process of a pre-trained language model, before updating the model parameter(s) of any one coding layer in the pre-trained language model each time, a gradient threshold is utilized to determine whether an adjustment pertaining to the model parameter(s) of the any one coding layer is too large this time, and if yes, then it is rejected to adjust the model parameter(s) of the any one coding layer. In this way, it is possible to reach a good compromise between retaining the common linguistic knowledge learned by the pre-trained language model and attaining a model fit for a downstream task, so that the model can as much as retain the common linguistic knowledge, and the performance of the model is able to be dramatically improved.

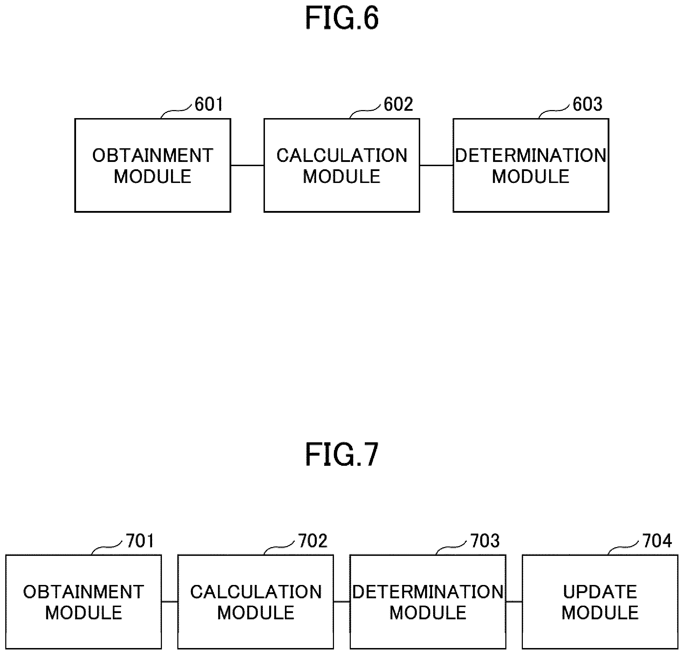

As presented in FIG. 6, a pre-trained language model fine-tuning apparatus is provided according to an embodiment of the present disclosure, that is inclusive of at least an obtainment module 601, a calculation module 602, and a determination module 603. That is, the pre-trained language model fine-tuning apparatus may also contain other modules as needed.

The pre-trained language model fine-tuning apparatus can be configured to perform the pre-trained language model fine-tuning method shown in FIG. 2. Specifically, the obtainment module 601, the calculation module 602, and the determination module 603 may be configured to conduct STEPS S201 to S203 of FIG. 2, respectively.

Here it should be pointed out that for the reason that STEPS S201 to S203 of FIG. 2 have been minutely described in the above embodiment, the details of them are omitted in this embodiment.

Moreover, another pre-trained language model fine-tuning apparatus according to an embodiment of the present disclosure is provided as illustrated in FIG. 7, that contains an obtainment module 701, a calculation module 702, a determination module 703, and an update module 704. Of course, the other pre-trained language model fine-tuning apparatus may also include other modules as needed.

The other pre-trained language model fine-tuning apparatus may be configured to perform the other pre-trained language model fine-tuning method presented in FIG. 3. Specifically, the obtainment module 701, the calculation module 702, and the determination module 703 may be configured to conduct STEPS S301 to S303 of FIG. 3, respectively, and the update module 704 can be configured to execute STEPS S304 and S305 in FIG. 3.

Here it should be mentioned that for the reason that STEPS S301 to S305 of FIG. 3 have been concretely described in the said embodiment, the details of them are omitted in this embodiment.

By means of the above-described pre-trained language model fine-tuning apparatuses, in the fine-tuning process of a pre-trained language model, before updating the model parameter(s) of any one coding layer in the pre-trained language model each time, a gradient threshold is employed to determine whether an adjustment pertaining to the model parameter(s) of the any one coding layer is too large this time, and if yes, then it is rejected to adjust the model parameter(s) of the any one coding layer. In this way, it is possible to reach a good compromise between the retention of the common linguistic knowledge learned by the pre-trained language model and the obtainment of a model proper for a downstream task, so that the model can as much as retain the common linguistic knowledge, and the performance of the model is able to be greatly enhanced.

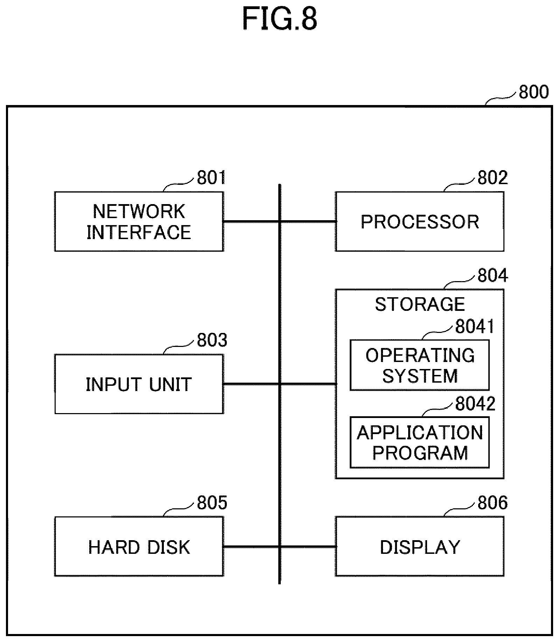

In what follows, a fine-tuning apparatus of a pre-trained language model is provided in accordance with an embodiment of the present disclosure. FIG. 8 is a block diagram of a fine-tuning apparatus 800 of a pre-trained language model according to this embodiment.

As illustrated in FIG. 8, the fine-tuning apparatus 800 may contain a network interface 801, a processor 802, an input unit 803, a storage 804 including an operating system 8041 and an application program 8042, a hard disk 805, and a display 806 which are connected by a bus.

The network interface 801 may be configured to connect to a network such as the Internet, a local area network (LAN), or the like. The processor 802 may be used to execute a computer program, for example, the application program 8042 stored in the storage 804, so as to fulfill the pre-trained language model fine-tuning methods according to the above embodiments. The input unit 803 may be configured to let a user input various instructions, which may be a keyboard or a touch panel, for example. The storage 804 may be utilized to store requisite computer programs and data as well as the intermediate results generated when the processor 802 conducts the application program 342, for example. The hard disk 805 may be employed to store any information or data necessary to achieve the pre-trained language model fine-tuning methods according to the said embodiments, for instance. The display 806 may be used to display the results acquired when executing the application program 8042 by the processor 802, for example.

Additionally, a computer-executable program and a non-transitory computer-readable medium are further provided. The computer-executable program may cause a computer to perform the pre-trained language model fine-tuning methods according to the above embodiments. The non-transitory computer-readable medium may store computer-executable instructions (i.e., the computer-executable program) for execution by a computer involving a processor. The computer-executable instructions may, when executed by the processor, render the processor to conduct the pre-trained language model fine-tuning methods in accordance with the above embodiments.

Here it should be noted that because the steps involved in the pre-trained language model fine-tuning methods have been minutely described in the said embodiments, the details of the steps are omitted here for the sake of convenience.

In addition, the above embodiments are just exemplary ones, and the specific structure and operation of them may not be used for limiting the present disclosure.

Furthermore, the embodiments of the present disclosure may be implemented in any convenient form, for example, using dedicated hardware or a mixture of dedicated hardware and software. The embodiments of the present disclosure may be implemented as computer software implemented by one or more networked processing apparatuses. The network may comprise any conventional terrestrial or wireless communications network, such as the Internet. The processing apparatuses may comprise any suitably programmed apparatuses such as a general-purpose computer, a personal digital assistant, a mobile telephone (such as a WAP or 3G, 4G, or 5G-compliant phone), and so on. Since the embodiments of the present disclosure may be implemented as software, each and every aspect of the present disclosure thus encompasses computer software implementable on a programmable device.

The computer software may be provided to the programmable device using any storage medium for storing processor-readable code such as a floppy disk, a hard disk, a CD ROM, a magnetic tape device, or a solid state memory device.

The hardware platform includes any desired hardware resources including, for example, a central processing unit (CPU), a random access memory (RAM), and a hard disk drive (HDD). The CPU may include processors of any desired type and number. The RAM may include any desired volatile or nonvolatile memory. The HDD may include any desired nonvolatile memory capable of storing a large amount of data. The hardware resources may further include an input device, an output device, and a network device in accordance with the type of the apparatus. The HDD may be provided external to the apparatus as long as the HDD is accessible from the apparatus. In this case, the CPU, for example, the cache memory of the CPU, and the RAM may operate as a physical memory or a primary memory of the apparatus, while the HDD may operate as a secondary memory of the apparatus.

While the present disclosure is described with reference to the specific embodiments chosen for purpose of illustration, it should be apparent that the present disclosure is not limited to these embodiments, but numerous modifications could be made thereto by a person skilled in the art without departing from the basic concept and technical scope of the present disclosure.

The present application is based on and claims the benefit of priority of Chinese Patent Application No. 202011529711.X filed on Dec. 22, 2020, the entire contents of which are hereby incorporated by reference.

## Claims

1. A pre-trained language model fine-tuning method comprising:
a step of obtaining a pre-trained language model, and determining a gradient threshold of each coding layer in the pre-trained language model;
a step of performing training on the pre-trained language model, and in the training process, calculating, before updating a model parameter(s) of any one coding layer each time, a gradient norm of the any one coding layer; and
a step of, in the training process, before updating the model parameter(s) of the any one coding layer each time, determining, based on whether the gradient norm of the any one coding layer is less than the gradient threshold of the any one coding layer, whether it is necessary to update the model parameter(s) of the any one coding layer this time.

2. The pre-trained language model fine-tuning method according to claim 1, further comprising:
a step of, in the training process, for each time the model parameter(s) of the any one coding layer is updated, in a case where it is determined that it is necessary to update the model parameter(s) of the any one coding layer this time, updating, based on a gradient of the model parameter(s) of the any one coding layer, the model parameter(s) of the any one coding layer, and in a case where it is determined that it is not necessary to update the model parameter(s) of the any one coding layer this time, rejecting to update the model parameter(s) of the same coding layer.

3. The pre-trained language model fine-tuning method according to claim 1 or 2, wherein,
the gradient norm of the any one coding layer is
a sum of squares of gradients of the respective model parameters of the any one coding layer;
a sum of absolute values of the respective model parameters of the any one coding layer; or
a largest one of absolute values of the respective model parameters of the any one coding layer.

4. The pre-trained language model fine-tuning method according to claim 1, 2 or 3 wherein,
the gradient threshold of each coding layer in the pre-trained language model is calculated based on a predetermined threshold function, wherein, an input of the predetermined threshold function is a sequence number of the same coding layer, and an output of the predetermined threshold function is the gradient threshold of the same coding layer.

5. The pre-trained language model fine-tuning method according to claim 4, wherein,
the sequence numbers of the respective coding layers in the pre-trained language model are sequentially numbered in a direction from an input layer to an output layer of the pre-trained language model, and the output of the predetermined threshold function is positively correlated with the input of the predetermined threshold function.

6. The pre-trained language model fine-tuning method according to any one of claims 1 to 5, wherein, the gradient norm of the any one coding layer in the pre-trained language model is a non-negative value.

7. A pre-trained language model fine-tuning apparatus comprising:
an obtainment module configured to obtain a pre-trained language model, and determine a gradient threshold of each coding layer in the pre-trained language model;
a calculation model configured to perform training on the pre-trained language model, and in the training process, calculate, before updating a model parameter(s) of any one coding layer each time, a gradient norm of the any one coding layer; and
a determination module configured to, in the training process, before updating the model parameter(s) of the any one coding layer each time, determine, based on whether the gradient norm of the any one coding layer is less than the gradient threshold of the any one coding layer, whether it is necessary to update the model parameter(s) of the any one coding layer this time.

8. The pre-trained language model fine-tuning apparatus according to claim 7, further comprising:
an update module configured to, in the training process, for each time the model parameter(s) of the any one coding layer is updated, in a case where it is determined by the determination module that it is necessary to update the model parameter(s) of the any one coding layer this time, update, based on a gradient of the model parameter(s) of the any one coding layer, the model parameter(s) of the any one coding layer, and in a case where it is determined by the determination module that it is not necessary to update the model parameter(s) of the any one coding layer this time, reject to update the model parameter(s) of the any one coding layer.

9. The pre-trained language model fine-tuning apparatus according to claim 7 or 8, wherein,
the calculation module is further configured to make the gradient norm of the any one coding layer to be
a sum of squares of gradients of the respective model parameters of the any one coding layer;
a sum of absolute values of the respective model parameters of the any one coding layer; or
a largest one of absolute values of the respective model parameters of the any one coding layer.

10. The pre-trained language model fine-tuning apparatus according to claim 7, 8 or 9, wherein,
the determination module is further configured to calculate, based on a predetermined threshold function, the gradient threshold of each coding layer in the pre-trained language model, wherein, an input of the predetermined threshold function is a sequence number of the same coding layer, and an output of the predetermined threshold function is the gradient threshold of the same coding layer.

11. The pre-trained language model fine-tuning apparatus according to claim 10, wherein,
the sequence numbers of the respective coding layers in the pre-trained language model are sequentially numbered in a direction from an input layer to an output layer of the pre-trained language model, and the output of the predetermined threshold function is positively correlated to the input of the predetermined threshold function.

12. The pre-trained language model fine-tuning apparatus according to any one of claims 7 to 11, wherein,
the gradient norm of the any one coding layer in the pre-trained language model is a non-negative value.

13. A pre-trained language model fine-tuning apparatus comprising:
a storage storing computer-executable instructions; and
a processor connected to the storage,
wherein, the computer-executable instructions, when executed, cause the processor to conduct the pre-trained language model fine-tuning method according to any one of claims 1 to 6.

14. A non-transitory computer-readable medium storing computer-executable instructions for execution by a processor, wherein, the computer-executable instructions, when executed, cause the processor to perform the pre-trained language model fine-tuning method according to any one of claims 1 to 6.

15. A computer program for causing a computer to execute the pre-trained language model fine-tuning method according to any one of claims 1 to 6.
